(19) **Europäisches Patentamt**

**European Patent Office**

**Office européen des brevets**

(11) **EP 1 068 154 B1**

(12) **FASCICULE DE BREVET EUROPEEN**

(45) Date de publication et mention
de la délivrance du brevet:
**19.05.2004 Bulletin 2004/21**

(51) Int Cl.$^7$: **C03B 5/235**, C03B 3/00,
C03B 5/04

(21) Numéro de dépôt: **00901697.3**

(22) Date de dépôt: **02.02.2000**

(86) Numéro de dépôt international:
**PCT/FR2000/000239**

(87) Numéro de publication internationale:
**WO 2000/046161 (10.08.2000 Gazette 2000/32)**

(54) **PROCEDE DE PREPARATION DE MATIERES PREMIERES POUR LA FABRICATION DE VERRE**

VERFAHREN ZUR VORBEREITUNG VON GLASGEMENG ZUM HERSTELLEN VON GLAS

METHOD FOR PREPARING RAW MATERIALS FOR GLASS-MAKING

(84) Etats contractants désignés:
**AT BE CH CY DE DK ES FI FR GB GR IE IT LI LU
MC NL PT SE**
Etats d'extension désignés:
**RO SI**

(30) Priorité: **05.02.1999 FR 9901406
22.12.1999 FR 9916297
18.01.2000 WOPCT/FR00/00091**

(43) Date de publication de la demande:
**17.01.2001 Bulletin 2001/03**

(73) Titulaire: **SAINT-GOBAIN GLASS FRANCE
92400 Courbevoie (FR)**

(72) Inventeur: **JEANVOINE, Pierre
F-78300 Poissy (FR)**

(74) Mandataire: **Muller, René et al
SAINT-GOBAIN RECHERCHE
39, quai Lucien Lefranc
93303 Aubervilliers (FR)**

(56) Documents cités:
**EP-A- 0 812 809          WO-A-99/35099
FR-A- 2 774 085          US-A- 3 266 789**

**Description**

L'invention concerne un procédé de préparation de certaines des matières que l'on peut utiliser pour fabriquer du verre.

Dans le contexte de la présente invention, on comprend par " matières premières " tous les matériaux, matières vitrifiables. minerais naturels ou produits synthétisés, matériaux issus de recyclage du type calcin etc..., qui peuvent entrer dans la composition venant alimenter un four verrier. De même, on comprend par " verre " le verre au sens large, c'est-à-dire englobant tout matériau à matrice vitreuse. vitrocéramique ou céramique. Le terme de " fabrication " comprend l'étape de fusion indispensable des matières premières et éventuellement toutes les étapes ultérieures/complémentaires visant à affiner/ conditionner le verre en fusion en vue de sa mise en forme définitive, notamment sous forme de verre plat (vitrages), de verre creux (flacons, bouteilles), de verre sous forme de laine minérale (verre ou roche) utilisée pour ses propriétés d'isolation thermique ou phonique ou même éventuellement de verre sous forme de fils dits textile utilisés dans le renforcement.

L'invention s'intéresse tout particulièrement aux matières premières nécessaires pour fabriquer les verres ayant une teneur significative en alcalins, notamment en sodium, par exemple les verres de type silico-sodo-calcique utilisés pour faire du verre plat. La matière première actuellement la plus fréquemment utilisés pour apporter le sodium est le carbonate de sodium $Na_2CO_3$, choix qui n'est pas dénué d'inconvénients. En effet, d'une part ce composé n'apporte que le sodium comme élément constitutif du verre, toute la partie carbonée se décomposant sous forme de dégagements de $CO_2$ lors de la fusion. D'autre part, il s'agit d'une matière première onéreuse, comparativement aux autres, car c'est un produit de synthèse, obtenu par le procédé Solvay à partir de chlorure de sodium et de calcaire, procédé imposant un certain nombre d'étapes de fabrication et assez peu économe en énergie.

C'est la raison pour laquelle différentes solutions ont déjà été proposées pour utiliser comme source de sodium non pas un carbonate mais un silicate, éventuellement sous forme d'un silicate mixte d'alcalins (Na) et d'alcalino-terreux (Ca) que l'on prépare préalablement. L'utilisation de ce type de produit intermédiaire a l'avantage d'apporter conjointement plusieurs des constituants du verre, et de supprimer la phase de décarbonatation. Elle permet également d'accélérer la fusion des matières premières dans leur ensemble, et de favoriser leur homogénéisation en cours de fusion, comme cela est indiqué, par exemple, dans les brevets FR-A-1 211 098 et FR-A-1 469 109. Cependant, cette voie pose le problème de la fabrication de ce silicate et ne propose pas de mode de synthèse pleinement satisfaisant.

Le WO-A1-99/35099 enseigne un four à brûleurs immergés pour la fabrication de verre avec introduction des matières vitrifiables sous le niveau des matières en fusion.

L'invention a alors pour but la mise au point d'un nouveau procédé de fabrication de ce type de silicate, qui soit notamment apte à assurer une production industrielle avec une fiabilité, un rendement et un coût acceptables.

L'invention a tout d'abord pour objet un procédé de fabrication de composés à base de silicates d'alcalins tels que Na, K et/ou à base d'alcalino-terreux tels que Mg ou Ca, et/ou à base de terres rares comme le cérium Ce, éventuellement sous forme de silicates mixtes associant au moins deux éléments parmi les alcalins, les alcalino-terreux et les terres rares, notamment des silicates associant aux alcalins des alcalino-terreux et/ou des terres rares. Ce procédé consiste à synthétiser ces composés par conversion de silice et d'halogénure(s), notamment de chlorure(s), desdits alcalins et/ou desdits alcalino-terreux et/ou desdites terres rares, du type NaCl, KCl ou $CeCl_4$ (et éventuellement des halogénures, notamment des chlorures d'alcalino-terreux, dans le cas des silicates en contenant), l'apport thermique nécessaire à cette conversion étant fourni, au moins pour partie, par un (des) brûleur(s) immergé(s).

Toujours dans le cadre de l'invention, on peut remplacer tout ou partie des halogénures comme source d'alcalins/alcalino-terreux/terres rares par des sulfates ou même des nitrates. Il peut ainsi s'agir de sulfate de sodium Na2SO4. Dans le contexte de l'invention, ces différents produits de départ (halogénures, nitrates, sulfates) sont donc à considérer comme équivalents et interchangeables.

On comprend ici sous le terme de " silice " tout composé contenant majoritairement de la silice (oxyde de silicium) $SiO_2$, même s'il peut également contenir d'autres éléments, d'autres composés minoritaires, ce qui est tout particulièrement le cas lorsqu'on utilise des matériaux naturels du type sable.

On comprend ici par " brûleurs immergés ", des brûleurs configurés de manière à ce que les " flammes " qu'ils génèrent ou les gaz de combustion issus de ces flammes se développent dans le réacteur où s'opère la conversion, au sein même de la masse des matières en cours de transformation. Généralement, ils se trouvent disposés de façon à affleurer ou à dépasser légèrement des parois latérales ou de la sole du réacteur utilisé (on parle ici de flammes, même s'il ne s'agit pas à proprement parlé des mêmes " flammes " que celles produites par des brûleurs aériens, pour plus de simplicité).

L'invention a ainsi trouvé une solution technologique particulièrement judicieuse pour parvenir à exploiter industriellement une transformation chimique déjà proposée par Gay-Lussac et Thénard, à savoir la conversion directe de NaCl en soude, faisant intervenir la réaction de NaCl avec de la silice à haute température en présence d'eau selon la réaction suivante :

$$2\,NaCl + SiO_2 + H_2O \rightarrow Na_2SiO_3 + 2\,HCl$$

le principe consistant à extraire la soude par formation du silicate, l'équilibre étant déplacé constamment dans le sens de la décomposition du NaCl parce que les deux phases ne sont pas miscibles.
(dans le cas où l'on utilise du sulfate de sodium plutôt que du chlorure de sodium, la réaction est la suivante :

$$Na_2SO_4 + SiO_2 + H_2O \rightarrow Na_2SiO_3 + H_2SO_4$$

Il se forme en fait d'abord du $SO_3$, qui se transforme en acide sulfurique sous l'effet de la température et de l'eau de combustion du brûleur immergé).

Cette réaction posait jusqu'ici des problèmes de mise en oeuvre considérables, liés à des difficultés pour réaliser un mélange intime des réactifs, et pour assurer leur renouvellement en cours de fabrication, liés également à des difficultés pour évacuer HCl (ou $H_2SO_4$) sans qu'il réagisse à nouveau sur le silicate formé, pour extraire le silicate et pour parvenir à apporter l'énergie thermique suffisante.

Utiliser des brûleurs immergés pour apporter cette énergie thermique résout en même temps la plupart de ces difficultés.

En effet, avoir recours à un chauffage par des brûleurs immergés avait déjà été proposé pour assurer la fusion de matières vitrifiables pour faire du verre. On pourra par exemple se reporter aux brevets US-3 627 504, US-3 260 587 ou US-4 539 034. Mais y avoir recours dans le contexte précis de l'invention, à savoir la synthèse de silicates à partir de sels, est extrêmement avantageux :

➥ ce mode de combustion génère en effet de l'eau, eau qui, on l'on vu plus haut, est indispensable à la conversion voulue. Grâce aux brûleurs immergés, on peut ainsi fabriquer in situ l'eau nécessaire à la conversion, au moins en partie (même si, dans certains cas, un apport en eau complémentaire peut être nécessaire). On est aussi sûr d'introduire l'eau au sein même des autres produits de départ, à savoir la silice et le(s) sel(s) (on désignera par souci de concision sous le terme de " sels " tous les halogénures de type chlorures d'alcalins, de terres rares, et d'alcalino-terreux éventuellement, utilisés comme réactifs de départ). ce qui est bien sûr propice à favoriser la réaction.

➥ par ailleurs, la combustion des brûleurs immergés provoque au sein des matières en cours de réaction de fortes turbulences, de forts mouvements de convection autour de chacune(s) des " flamme(s) " et/ou de chacun des jets de gaz provenant de chacun des brûleurs. De fait, elle va donc assurer, au moins pour partie, un fort brassage entre les réactifs, brassage nécessaire pour garantir un mélange intime entre les différents réactifs, tout particulièrement ceux introduits sous forme solide (pulvérulente) comme la silice et le(s) sel(s),

➥ les brûleurs immergés sont aussi particulièrement intéressants sur le plan strictement thermique, car ils apportent la chaleur directement là où elle est nécessaire, à savoir dans la masse des produits en cours de réaction, en minimisant donc toute déperdition d'énergie, et parce qu'ils sont suffisamment puissants, efficaces pour que les réactifs puissent atteindre les températures relativement élevées nécessaires à leur fusion/à leur conversion, à savoir des températures d'au moins 1000°C. notamment de l'ordre de 1200°C.

➥ ils sont en outre un mode de chauffage particulièrement respectueux de l'environnement, en réduisant au minimum toute éventuelle émission de gaz de type $NO_x$ notamment.

On peut donc conclure que l'efficacité de ces brûleurs à tous les niveaux (qualité du mélange, excellent transfert thermique, un des réactifs généré in situ) fait que la conversion est grandement favorisée, et cela sans qu'il y ait nécessairement besoin d'atteindre des températures extrêmement élevées.

Le comburant choisi pour alimenter le(s) brûleur(s) immergé(s) peut être simplement de l'air. De préférence, on privilégie cependant un comburant sous forme d'air enrichi en oxygène, et même sous forme substantiellement d'oxygène seul. Une forte concentration en oxygène est avantageuse pour différentes raisons : on diminue ainsi le volume des fumées de combustion, ce qui est favorable sur le plan énergétique et évite tout risque de fluidisation excessive des matières en cours de réaction pouvant provoquer des projections sur les superstructures, la voûte du réacteur où s'opère la conversion. En outre, les " flammes " obtenues sont plus courtes, plus émissives, ce qui permet un transfert plus rapide de leur énergie aux matières en cours de fusion /conversion.

En ce qui concerne le choix du combustible pour le(s) brûleur(s) immergé(s), deux voies sont possibles, alternatives ou cumulatives :

➥ on peut choisir un combustible liquide du type fioul, ou gazeux du type gaz naturel (majoritairement du méthane), propane, hydrogène.

➥ on peut aussi utiliser un combustible sous forme solide contenant du carbone, par exemple du charbon ou tout matériau contenant des polymères hydrocarbonés, éventuellement chlorés.

Les choix faits pour le comburant et le combustible des brûleurs immergés influent sur la nature des produits obtenus, mis à part les silicates. Ainsi, quand les brûleurs sont alimentés en oxygène et en gaz naturel, on a schématiquement les deux réactions suivantes qui se produisent : (en partant du cas de figure le plus simple où l'on veut faire du silicate de Na à partir de NaCl, mais on peut le transposer à tous les autres cas, où il s'agit de faire des silicates de K. de Ce, contenant Ca ou Mg, etc...) :

(a)

$$2\ NaCl + SiO_2 + H_2O \rightarrow Na_2SiO_3 + 2\ HCl$$

(b)

$$CH_4 + 2\ O_2 \rightarrow CO_2 + 2\ H_2O$$

On peut regrouper ces deux réactions en une seule :

(c)

$$4\ NaCl + 2\ SiO_2 + CH_4 + 2\ O_2 \rightarrow 2\ Na_2SiO_3 + 4\ HCl + CO_2$$

Quand on utilise un combustible de l'hydrogène plutôt que du gaz naturel, on n'a plus d'émission de $CO_2$, la réaction globale s'écrit :

(d)

$$4\ NaCl + 2\ SiO_2 + 2\ H_2 + O_2 \rightarrow 2\ Na_2SiO_3 + 4\ HCl$$

Quand on utilise un combustible sous forme solide, contenant du carbone, avec toujours un comburant sous forme d'oxygène, la réaction suivante s'écrit :

(e)

$$2\ NaCl + 3/2\ O_2 + C + SiO_2 \rightarrow Na_2SiO_3 + Cl_2 + CO_2$$

Cette fois, on ne produit donc plus du HCl, mais du chlore $Cl_2$ comme sous-produits de la conversion.
Il est donc clair de ces différentes réactions-bilans que la conversion envisagée par l'invention génère également des dérivés halogénés, tout particulièrement des dérivés chlorés valorisables comme HCl ou $Cl_2$ que l'on retrouve dans les fumées de combustion. Deux voies d'utilisation sont possibles :

➥ l'une consiste à les retraiter comme des effluents. On peut ainsi neutraliser HCl avec du carbonate de calcium $CaCO_2$, ce qui revient à fabriquer du $CaCl_2$, éventuellement valorisable (pour le déneigement des routes par exemple).
➥ l'autre voie consiste à considérer la conversion selon l'invention comme un moyen de fabriquer de manière industrielle HCl ou $Cl_2$ (ou $H_2SO_4$), produits chimiques de base largement utilisés dans l'industrie chimique. (On peut notamment substituer le HCl ou le $Cl_2$ fabriqué selon l'invention au chlore obtenu par voie électrolytique qui est nécessaire à la fabrication de polymères chlorés du type PVC, polychlorure de vinyle). Dans ce cas, il faut alors les extraire des fumées et établir ainsi une filière de production industrielle de HCl ou de $Cl_2$, par exemple en implantant le dispositif de mise en oeuvre du procédé selon l'invention directement dans un site de l'industrie chimique ayant besoin de ce type de produits chlorés. Valoriser ainsi les dérivés chlorés formés permet d'abaisser encore le coût des matières premières porteuses d'alcalins nécessaires à la fabrication du verre.

Un premier débouché pour les silicates fabriqués selon l'invention concerne l'industrie verrière : ils peuvent se substituer, au moins pour partie, aux matières premières traditionnelles pourvoyeuses d'alcalins ou de terres rares, avec tout particulièrement en ce qui concerne le sodium, une substitution au moins partielle du $CaCO_3$ par $Na_2SiO_3$. On peut donc employer les silicates de l'invention pour alimenter un four verrier, et ceci notamment de deux façons différentes :

   ➡ la première façon consiste à traiter les silicates formés pour les rendre compatibles avec une utilisation en tant que matières premières vitrifiables pour four verrier : il s'agit donc de les extraire du réacteur et généralement de les mettre " à froid " en phase solide pulvérulente, notamment par une étape de granulation selon des techniques connues de l'industrie verrière. On a donc une déconnexion complète entre le processus de fabrication du silicate et le processus de fabrication du verre avec mise en forme appropriée, et stockage/transport éventuel du silicate formé avant qu'il n'alimente le four verrier,
   ➡ la seconde façon consiste à utiliser le(s) silicate(s) formé(s) selon l'invention " à chaud ". c'est-à-dire à utiliser un procédé de fabrication du verre incorporant une étape préalable de fabrication du silicate venant alimenter, encore en fusion, le four verrier. On peut ainsi fabriquer le silicate dans un réacteur connecté au four verrier, constituant un de ses compartiments " amont " par opposition à ses éventuels compartiments " aval " destinés à l'affinage/le conditionnement du verre une fois fondu.

Dans ces deux cas de figure, le four verrier peut être de conception traditionnelle (par exemple four à fusion électrique par électrodes immergées, four à brûleurs aériens fonctionnant avec des régénérateurs latéraux, four à boucle, et tout type de four connu dans l'industrie verrière incluant ainsi les fours à brûleurs immergés), avec éventuellement une conception et un mode de fonctionnement légèrement adaptés à un processus de fusion sans carbonate ou avec moins de carbonate que pour les fusions standards.

Il est à noter que certains silicates autres que le silicate de sodium sont également très intéressants à fabriquer selon l'invention. Ainsi, l'invention permet de fabriquer du silicate de potassium à partir de KCl, ce qui est, économiquement au moins, très avantageux comme matière première porteuse de Si et de K pour fabriquer des verres dits " à alcalins mixtes ", c'est-à-dire contenant à la fois Na et K. Ces verres sont notamment utilisés pour faire des écrans tactiles, des verres d'écran de télévision, des verres pour écran plasma de visualisation ("Plasma Display Panel " en anglais).

De même, l'invention permet de fabriquer de façon plus économique des verres spéciaux contenant des additifs pour lesquels les chlorures sont moins chers que les oxydes. C'est le cas des terres rares comme le cérium : la présence d'oxyde de cérium conférant des propriétés anti-U.V. aux verres, et les terres rares de ce type rentrent aussi dans la composition de verres spéciaux à haut module élastique pour disque dur. L'invention permet ainsi d'avoir une matière première porteuse de Si et de Ce, le silicate de cérium, à un coût modéré.

Un autre avantage annexe de l'invention est que la silice introduite au départ subit lors de la conversion en silicate une certaine déferrisation car le chlorure de fer est volatil : le verre produit à partir de ce silicate, en utilisant au moins une certaine quantité de ce silicate aura donc tendance à être plus clair qu'un verre n'utilisant pas du tout ce type de silicate. Cela est esthétiquement intéressant, et tend à augmenter le facteur solaire du verre (dans une application " verre plat ").

Un second débouché pour les silicates fabriqués selon l'invention (à part être utilisés comme matières premières pour four verrier), plus particulièrement le silicate de soude, concerne l'industrie des détergents ; le silicate de soude $Na_2SiO_3$ entrant fréquemment dans la composition des lessives/détergents.

Un troisième débouché pour les silicates (et éventuellement les dérivés chlorés) formés selon l'invention concerne la préparation de silices particulières, désignées communément sous le terme de " silices précipitées " entrant par exemple dans la composition des bétons. On peut en effet opérer une attaque acide des silicates formés selon l'invention, avantageusement par l'acide chlorhydrique HCl qui a été également formé par la conversion selon l'invention, de manière à faire précipiter de la silice sous forme de particules ayant une granulométrie particulière : la dimension des particules visée est généralement nanométrique (1 à 100 nm par exemple).

Le chlorure de sodium également formé lors de la précipitation de la silice peut avantageusement être recyclé, en servant à nouveau de matière première pour la fabrication de silicate selon l'invention tout particulièrement. Il s'agit ici d'un prolongement de l'invention, où, partant d'une silice particulaire de " grosse " granulométrie (de l'ordre du micron ou plus gros par exemple), on obtient à nouveau de la silice particulaire mais de dimension de particule bien inférieure, ce contrôle et cette dimension particulière ouvrant la voie à des utilisations très variées dans des matériaux utilisés dans l'industrie.

Pour ce troisième débouché plus particulièrement, il est intéressant de choisir plutôt un sulfate alcalin qu'un chlorure : on récupère non pas HCl mais $H_2SO_4$, qui sert à l'attaque acide du silicate de soude ainsi formé. C'est ce type d'acide qui est usuellement utilisé dans l'industrie chimique pour préparer des silices précipitées. Il est plus avantageux que HCl dans ce cas particulier, car il évite tout risque de formation de chlorures résiduels dans la silice précipitée, qui sont des sources de corrosion potentielles dans certaines applications de cette dernière.

Un procédé de fabrication de silice précipitée selon l'invention peut se dérouler ainsi, de façon schématique :

- ➥ réaction en four équipé de brûleurs immergés (notamment brûleurs oxy-gas ou oxy-hydrogène), entre un sable de silice de pureté appropriée et du sulfate de sodium, avec une quantité d'eau à ajouter de façon contrôlée en complément de celle générée par la combustion, du silicate de sodium se forme selon la réaction précédemment mentionnée, il est évacué en continu, le $SO_3$ généré se transforme en $H_2SO_4$ que l'on récupère par exemple au niveau de la cheminée équipée en conséquence,
- ➥ le silicate de sodium produit avec le module $SiO_2/Na_2O$ adéquat est ensuite attaqué dans des conditions appropriées (notamment en termes de pH) par l'acide sulfurique récupéré, la silice est ainsi précipitée, et traitée ensuite en vue de lui conférer les propriétés voulues selon les applications envisagées (par exemple en tant que charge pour caoutchouc pour pneumatiques ...),
- ➥ au cours de cette réaction, il se forme à nouveau du sulfate de sodium, qui à son tour peut être concentré et recyclé dans le four équipé de brûleurs immergés comme source de sodium.

On voit que ce procédé peut fonctionner en continu, en boucle fermée pour ce qui concerne l'acide et la source de sodium. Il se comporte comme un "tamis à silice" sans autre consommation que celle du sable et de l'énergie. On peut récupérer aussi la chaleur des fumées et de condensation de $SO_3$ dans un échangeur approprié pour produire par exemple la vapeur nécessaire à la concentration des solutions aqueuses.

Ce type de procédé s'applique de façon tout-à-fait similaire si on utilise un autre alcalin que le sodium (ou un autre dérivé qu'un sulfate) ou tout autre élément si tant est que son sulfate est thermiquement instable et susceptible de conduire au même type de réaction.

Une autre application intéressante du procédé concerne le traitement (inertage par vitrification tout particulièrement) de déchets chlorés, tout particulièrement de déchets chlorés et carbonés tels que des polymères chlorés (PVC....) la fusion par brûleurs immergés, selon l'invention, peut pyrolyser ces déchets, avec comme produits de combustion ultimes $CO_2$, $H_2O$ et HCl, HCl (ou même $H_2SO_4$) pouvant être, comme on l'a vu précédemment, neutralisé ou valorisé tel quel. On peut noter que ces déchets peuvent aussi alors servir de combustible solide porteur de carbone, ce qui de fait peut permettre de diminuer la quantité de combustible à injecter au niveau des brûleurs. (Il peut s'agir d'autres types de déchets comme les sables de fonderie). La pyrolyse de ces différents déchets est là encore intéressante du point de vue économique, car leur coût de traitement par ailleurs nécessaire vient en déduction du coût de production des silicates selon l'invention. Plutôt qu'une pyrolyse véritable de déchets, il peut aussi s'agir de vitrification.

Ci-après quelques détails sur l'inertage de ces déchets organo-chlorés : au sable et au chlorure ou équivalent, on peut donc ajouter des déchets solides ou liquides du type organo-chlorés. On peut aussi ajouter différents additifs, comme la chaux, l'alumine (sous forme d'une argile, matière première peu coûteuse, par exemple), ou d'autres oxydes. On fait ainsi une véritable vitrification, le vitrifiat obtenu étant à même d'enrober et de stabiliser les éventuelles charges minérales contenues dans les déchets en question. Ce vitrifiat peut ensuite être mis en décharge. L'acide produit peut être récupéré dans une tour d'absorption filtrant les fumées et être recyclé. Ce procédé est économiquement très avantageux : d'une part, le principal fondant utilisé est apporté par le sel, et une partie au moins de l'énergie nécessaire à la vitrification est apportée par les déchets eux-mêmes. D'autre part, il offre la possibilité de recycler l'acide formé, HCl notamment. On peut bien sûr combiner plusieurs types de déchets combustibles. Pour cette application, il est préférable de fabriquer un silicate riche en alcaline-terreux, voire uniquement constitué de silicate d'alcalino-terreux : puisqu'il s'agit d'inerter des déchets, et non de fabriquer un verre de haute qualité, il est avantageux d'avoir recours essentiellement à des silicates d'alcalino-terreux, car la matière première apportant ces alcalino-terreux est moins coûteuse que celle apportant des alcalins.

L'invention a également pour objet un dispositif selon la revendication 12, de mise en oeuvre du procédé selon l'invention. Ce dispositif comporte au moins un réacteur équipé de brûleur(s) immergé(s) et d'au moins un moyen d'introduction de la silice et/ou des halogénures (ou équivalents du type sulfates ou nitrates), de préférence sous le niveau des matières en fusion, notamment sous la forme d'une ou plusieurs enfourneuses à vis sans fin. Il en est de même, de préférence, pour les combustibles solides ou liquides éventuellement utilisés, comme les déchets organo-chlorés précédemment mentionnés. On peut ainsi introduire directement au sein de la masse des produits en cours de fusion/réaction au moins ceux des réactifs de départ susceptibles de se vaporiser avant d'avoir le temps de réagir : on pense ici tout particulièrement au chlorure de sodium NaCl, et on garantit un temps de séjour suffisant aux combustibles liquides ou solides pour achever leur combustion.

De préférence, les parois du réacteur, notamment celles destinées à être en contact avec les différents réactifs/produits de réaction impliqués dans la conversion, sont munies de matériaux réfractaires doublés d'un garnissage de métal. Le métal doit être résistant vis-à-vis de différentes attaques corrosives, notamment ici de celles provoquées par HCl. On privilégie donc le titane, un métal de la même famille, ou un alliage contenant du titane, ou encore du zirconium ou un alliage contenant du zirconium. Avantageusement, on peut prévoir que tous les éléments à l'intérieur du réacteur en débouchant dans ce dernier soient à base de ce type de métal ou protégés superficiellement par un revêtement de ce métal (les enfourneuses, les brûleurs immergés). Il est préférable que les parois du réacteur, et notamment aussi toutes les parties métalliques à l'intérieur de ce dernier soient associés à un système de refroidissement par circulation de fluide, du type boîte à eau. Les parois peuvent également être entièrement métalliques, sans ou avec très peu des réfractaires standards que l'on utilise pour la construction des fours verriers.

Les parois du réacteur définissent par exemple une cavité sensiblement cubique, parallélépipédique ou cylindrique (base carrée, rectangulaire ou ronde). Avantageusement, on peut prévoir plusieurs points d'introduction des réactifs de départ, par exemple répartis de façon régulière dans les parois latérales du réacteur, sous forme notamment d'un certain nombre d'enfourneuses. Cette multiplicité des points d'amenée permet de limiter la quantité de réactifs au niveau de chacun d'entre eux, et d'avoir un mélange plus homogène dans le réacteur.

Le réacteur selon l'invention est équipé de moyens de traitement des effluents chlorés, notamment de récupération ou de neutralisation d'effluents du type $Cl_2$, HCl, $H_2SO_4$ et/ou de moyens de séparation dans les effluents gazeux des particules solides, notamment à base de chlorures métalliques. Ces moyens sont avantageusement disposés dans la (les) cheminées évacuant les fumées hors du réacteur.

Enfin, l'invention a également pour but un procédé d'élaboration de verre contenant de la silice et des oxydes d'alcalins du type $Na_2O$, $K_2O$ et/ou des oxydes d'alcalino-terreux du type MgO ou CaO et/ou des oxydes de terres rares du type $CeO_2$, par fusion de matières vitrifiables où l'apport thermique nécessaire à ladite fusion provient au moins pour partie de brûleurs immergés. Ici, l'invention réside dans le fait que les matières premières porteuses d'alcalins du type Na, K, ou d'alcalino-terreux ou de terres rares du type Ce sont au moins pour partie sous forme d'halogénures, notamment de chlorures, desdits éléments, comme NaCl, KCl, $CeCl_4$ ou des sulfates ou nitrates. C'est ici le second aspect majeur de l'invention, où, en quelque sorte, tout se passe comme si on fabriquait le silicate précédemment décrit " in situ ", lors du procédé même de fusion des matières vitrifiables pour faire du verre. L'intérêt économique à remplacer tout ou partie, notamment, du carbonate de sodium par du NaCl est clair. On retrouve ici les mêmes avantages que ceux mentionnés plus haut, concernant la fabrication de silicate indépendamment de celle du verre, à savoir notamment la moindre teneur en fer du verre, les valorisations possibles des dérivés (halogénés) chlorés produits, la pyrolyse ou vitrification de déchets éventuellement aptes par ailleurs à servir de combustible solide ...

L'invention sera ci-après détaillée à l'aide d'un mode de réalisation illustré par la figure suivante :

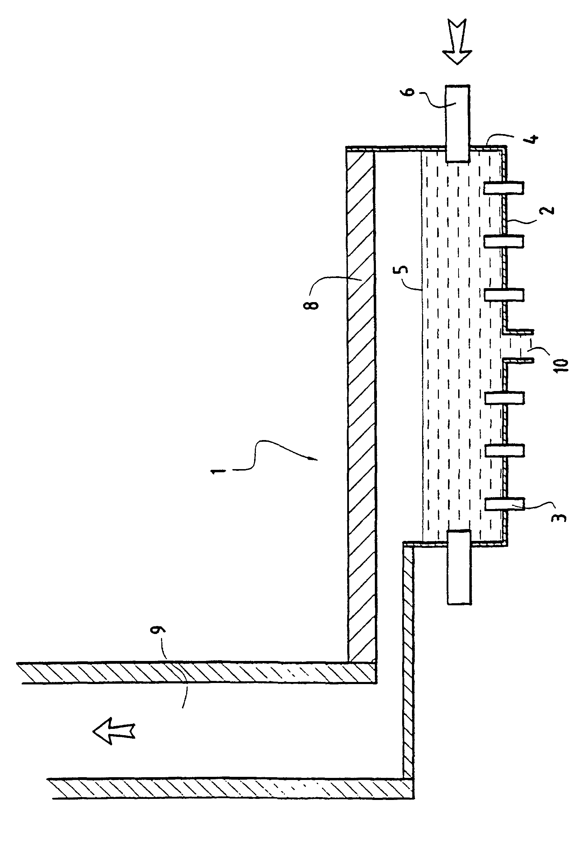

❏ figure 1 : une installation schématique pour fabriquer du silicate de sodium selon l'invention.

Cette figure n'est pas nécessairement à l'échelle et a été extrêmement simplifiée pour plus de clarté.

Elle représente un réacteur 1 comprenant une sole 2 de forme rectangulaire percée régulièrement de façon à être équipée de rangées de brûleurs 3 qui la traversent et pénètrent dans le réacteur sur une hauteur réduite. Les brûleurs sont de préférence recouverts de titane et refroidis à l'eau. Les parois latérales sont refroidies à l'eau également et comportent un revêtement de réfractaires électrofondus 5 ou sont entièrement métalliques à base de titane. Le niveau 5 des matières en cours de réaction/fusion est tel que les enfourneuses à vis sans fin 6 introduisent les réactifs au niveau des parois latérales sous ce niveau.

La sole comportant les brûleurs peut avoir une épaisseur de réfractaires électrofondus plus importante que les parois latérales. Elle est percée d'un trou de coulée 10 pour extraire le silicate.

La voûte 8 peut être une voûte plate suspendue constituée de matériaux réfractaires du type mullite ou zircone-mullite ou AZS (alumine- zircone-silice) ou de tout matériau céramique résistant à HCl et ou NaCl. Elle est conçue de façon à être étanche aux fumées contenant du HCl : une solution non limitative pour garantir cette étanchéité consiste à utiliser une structure céramique en nid d'abeille constituée de pièces hexagonales creuses dans lesquelles on place un isolant. L'étanchéité est alors réalisé entre les pièces à l'extrados, par un mastic basse température résistant à HCl. Elle protège ainsi la structure porteuse métallique. La cheminée 9 est également construite en matériaux résistants à HCl et NaCl (réfractaires en oxydes. carbure de silicium, graphite). Elle est munie d'un système de séparation des particules solides qui sont susceptibles de condenser (chlorures métalliques) et d'une tour à récupération de HCl, qui ne sont pas représentés.

Une fois le silicate extrait du réacteur par le trou de coulée 10, il est acheminé vers un granulateur. non représenté, du type de ceux utilisé dans l'industrie verrière ou dans l'industrie du silicate de soude pour lessive.

Le procédé a pour but de fabriquer un silicate très concentré en sodium, ce que l'on quantifie de manière connue par un rapport en mole de $Na_2O$ par rapport au total $(SiO_2 + Na_2O)$ aux environ de 50%, en introduisant dans le réacteur par les enfourneuses un mélange de sable (silice) et de NaCl. Ces deux réactifs peuvent être également introduits séparément, et peuvent avoir été éventuellement préchauffés avant introduction dans le réacteur.

De préférence, les brûleurs 3 sont alimentés par de l'oxygène et du gaz naturel ou de l'hydrogène.

La viscosité du mélange en cours de fusion/réaction et la vitesse de réaction élevée obtenue grâce à la technologie des brûleurs immergés permettent d'atteindre des tirées spécifiques élevées, pour donner un ordre de grandeur de par exemple au moins 10 tonnes/jour.

En conclusion, le procédé de l'invention ouvre une nouvelle voie de fabrication à coût modéré de silicates, tout particulièrement de silicates de sodium, potassium, cérium (ou encore d'alcalino-terreux). Il rentre également dans le contexte de la présente invention d'utiliser mutadis mutandi le même procédé pour fabriquer non plus des silicates mais des titanates, des zirconates, des aluminates de ces éléments, (éventuellement mélangés à des silicates).

On substitue ainsi au moins partiellement au silicium un métal, notamment appartenant aux métaux de transition et plus particulièrement de la colonne 4b du tableau périodique comme Ti. Zr ou aux métaux de la colonne 3a du tableau périodique comme Al. L'avantage d'une telle substitution est que le produit obtenu est soluble dans l'eau. L'attaque sélection de ces produits en solution aqueuse, notamment en utilisant l'acide chlorhydrique formé lors de la conversion, conduit à la précipitation de particules non plus de silice, comme mentionné plus haut dans le texte, mais de particules d'oxyde métallique correspondant comme $TiO_2$, $ZrO_2$, $Al_2O_3$, généralement présentant des dimensions nanométriques comme lorsqu'on part de silice, et qui trouvent de nombreuses applications dans l'industrie. On peut ainsi les employer en tant que charges dans des polymères, dans les bétons, les incorporer dans des matériaux céramiques ou vitrocéramiques. On peut aussi exploiter leurs propriétés photocatalytiques : sont particulièrement visées les particules de $TiO_2$ (qui peuvent être incorporées dans des revêtements photocatalytiques à propriétés anti-salissures pour tout matériau architectural, vitrage, etc...).

Pour fabriquer selon l'invention ces titanates, zirconates, aluminates, on transpose directement le procédé décrit plus haut pour obtenir les silicates, en partant d'halogénures du type NaCl et des oxydes métalliques des métaux impliqués ($TiO_2$, $ZrO_2$, $Al_2O_3$, ...).

Alternativement, on peut utiliser comme produit de départ de la conversion porteur du métal directement l'halogénure dudit métal et non plus son oxyde. Il peut notamment s'agir de chlorure comme $TiCl_4$, $ZrCl_4$, $AlCl_3$ (on peut également choisir comme produits de départ porteurs du métal un mélange d'oxyde et de chlorure dudit métal). Dans ce cas. la matière porteuse d'alcalins peut être le même halogénure du type NaCl utilisé pour faire du silicate, ce sel pouvant être éventuellement complété ou remplacé par de la soude quand c'est l'alcalin sodium qui est impliqué.

Tout comme pour le cas de la " silice précipitée ", ce prolongement du procédé selon l'invention peut ainsi être vu comme un moyen de modifier, notamment d'abaisser la dimension des particules d'un oxyde métallique, de façon à lui ouvrir d'autres applications dans des matériaux industriels.

Il est à noter que l'invention permet de recycler différents déchets. Il peut s'agir, notamment, de nettoyer/traiter du sable pollué, notamment lors de marées noires : on peut ainsi collecter le sable souillé comme produit de départ pour la silice. Cela présente deux avantages majeurs :

➡ d'une part, le sable est déjà imprégné du combustible (le fuel, les composés hydrocarbonés qui le souillent).

➡ d'autre part, c'est une méthode simple pour débarrasser les côtes et les plages de leur sable pollué, quand tout autre moyen pour nettoyer le sable est trop long ou trop coûteux. La méthode de l'invention permet donc d'éliminer complètement le fuel. Il est avantageux, pour ce type d'application, de fabriquer des silicates d'alcalino-terreux ou majoritairement à base de ces éléments : tout comme pour l'application à l'inertage des déchets organo-chlorés mentionnée plus haut, il est économiquement plus intéressant d'utiliser des matières premières porteuses d'alcalino-terreux que des matières premières porteuses d'alcalins.

## Revendications

1. Procédé de fabrication de composés à base de silicate(s) d'alcalins tels que Na, K et/ou d'alcalino-terreux tels que Ca, Mg et/ou de terres rares telles que Ce, éventuellement sous forme de silicates mixtes associant au moins deux de ces éléments, par conversion de silice et d'halogénures, notamment de chlorure(s), ou de sulfate(s) ou de nitrate(s) desdits alcalins et/ou desdites terres rares et/ou desdits alcalino-terreux, tels que NaCl, KCl, $CeCl_4$, **caractérisé en ce que** l'apport thermique nécessaire à la conversion est fourni, au moins pour partie, par un (des) brûleur(s) immergé(s) (3) dont la(les) flamme(s) se développe(nt) au sein même de la masse des matières (5) en cours de transformation.

2. Procédé selon la revendication précédente, **caractérisé en ce qu'**on alimente le(s) brûleur(s) immergé(s) (3) avec un comburant sous forme d'air, d'air enrichi en oxygène ou d'oxygène.

3. Procédé selon l'une des revendications précédentes, **caractérisé en ce qu'**on alimente le(s) brûleur(s) immergé (s) (3) avec un combustible sous forme de gaz naturel, de fioul ou d'hydrogène.

4. Procédé selon l'une des revendications précédentes, **caractérisé en ce qu'**on amène à proximité dudit (desdits) brûleur(s) (3) du combustible sous forme solide ou liquide.

5. Procédé selon la revendication 4, **caractérisé en ce que** le combustible sous forme solide ou liquide contient des matières carbonées à base de polymères, éventuellement chlorés, ou à base de charbon.

6. Procédé selon l'une des revendications précédentes, **caractérisé en ce que** la combustion créée par le(s) brûleur (s) immergé(s) assure au moins pour partie le brassage de la silice et du (des) halogénure(s) ou sulfate(s) ou nitrate(s).

7. Procédé selon l'une des revendications précédentes, **caractérisé en ce que** la combustion créée par le(s) brûleur (s) immergé(s) (3) génère au moins pour partie l'eau nécessaire à la conversion.

8. Procédé selon l'une des revendications précédentes, **caractérisé en ce que** la conversion génère également des dérivés halogénés, notamment des dérivés chlorés valorisables comme HCl ou $Cl_2$, ou du $H_2SO_4$.

9. Procédé selon l'une des revendications précédentes, **caractérisé en ce qu'**on traite le(s) silicate(s) formé(s) pour le (les) rendre compatible(s) avec une utilisation en tant que matière(s) première(s) vitrifiable(s) pour four verrier, traitement comportant notamment une étape de granulation.

10. Procédé selon l'une des revendications 1 à 8, **caractérisé en ce que** le(s) silicate(s) formé(s) alimente(nt) à chaud un four verrier.

11. Procédé selon l'une des revendications précédentes, **caractérisé en ce que** du silicate de Na est fabriqué par conversion de silice et de sulfate de Na.

12. Dispositif de mise en oeuvre du procédé selon l'une des revendications précédentes, comportant au moins un réacteur (1) équipé de brûleur(s) immergé(s) (3) et au moins un moyen d'introduction de la silice et/ou du (des) halogénure(s), sulfates ou nitrates et éventuellement les combustibles solides ou liquides, **caractérisé en ce que** le réacteur (1) est équipé de moyens de traitement des effluents chlorés ou de $H_2SO_4$, notamment des moyens de récupération de HCl ou $Cl_2$, ou de neutralisation de HCl et/ou de moyens de séparation dans les effluents gazeux de particules solides, par exemple à base de chlorure métallique.

13. Dispositif selon la revendication précédente, **caractérisé en ce que** les moyens de traitement sont disposés dans une cheminée (9) évacuant les fumées hors du réacteur.

14. Dispositif selon l'une des revendications de dispositif précédentes, **caractérisé en ce que** le moyen d'introduction est situé sous le niveau des matières en cours de fusion (5), notamment sous la forme d'enfourneuse(s) (6) à vis sans fin

15. Dispositif selon l'une des revendications de dispositif précédentes, **caractérisé en ce que** les parois (2, 4) du réacteur (1) notamment celles destinées à être en contact avec les différents réactifs/produits de réaction impliqués dans la conversion sont munies de matériaux réfractaires par exemple de type électrofondu ou de matériaux réfractaires doublés d'un garnissage de métal du type titane ou zirconium ou sont à base de ces types de métal, et sont de préférence associées, au moins pour les parois latérales (4), à un système de refroidissement par circulation de fluide du type eau.

16. Dispositif selon l'une des revendications de dispositif précédentes, **caractérisé en ce que** les parois du réacteur (1) définissent une cavité sensiblement cubique, parallélépipédique ou cylindrique.

17. Utilisation du procédé selon l'une des revendications 1 à 11 pour préparer des matières premières vitrifiables pour la fabrication de verre.

18. Utilisation du procédé selon l'une des revendications 1 à 11 pour préparer des matières premières, notamment du silicate de sodium, pour la fabrication de détergents.

19. Utilisation du procédé selon l'une des revendications 1 à 11 pour préparer des matières premières, notamment du silicate de sodium, pour la fabrication de silice précipitée, plus particulièrement à partir de silice et de sulfate de sodium.

20. Utilisation selon la revendication 19, **caractérisée en ce que** l'on fabrique du silicate de sodium par conversion de silice et de sulfate de sodium dans un four dont l'apport thermique nécessaire est fourni au moins pour partie par un(des) brûleur(s) immergé(s) (3), le $SO_3$ généré se transformant en acide sulfurique qui est récupéré et qui sert à attaquer ledit silicate de sodium pour faire ladite silice précipitée avec formation de sulfate de sodium, lequel est recyclé dans ledit four.

**21.** Utilisation selon l'une des revendications 19 et 20, **caractérisée en ce que** la silice précipité est utilisée comme charge dans du caoutchouc pour pneumatiques.

**22.** Utilisation du procédé selon l'une des revendications 1 à 11 pour vitrifier/inerter des déchets du type déchets organo-chlorés, de préférence par conversion de silice et de matière première porteur d'alcalino-terreux au moins.

**23.** Utilisation du procédé selon l'une des revendications 1 à 11 pour retraiter du sable pollué par du fuel ou autres composés hydrocarbonés, de préférence par la conversion de silice et de matière première porteur d'alcalino-terreux au moins.

**24.** Procédé d'obtention de verre contenant de la silice et des oxydes d'alcalins du type $Na_2O$, $K_2O$ et/ou des oxydes d'alcalino-terreux du type CaO, MgO et/ou des oxydes de terres rares du type $CeO_2$ par fusion de matières vitrifiables où l'apport thermique nécessaire à ladite fusion provient au moins pour partie de brûleur(s) immergé(s) (3) dont la(les) flamme(s) se développe(nt) au sein même de la masse des matières en cours de transformation, **caractérisé en ce que** les matières vitrifiables porteuses d'alcalins du type Na, K ou de terres rares du type Ce ou d'alcalino-terreux sont au moins pour partie sous forme d'halogénures, notamment de chlorures ou sulfates ou nitrates desdits éléments, tels que NaCl, KCl, $CeCl_4$, $Na_2SO_4$.

**Patentansprüche**

**1.** Verfahren zur Herstellung von Verbindungen auf der Basis von einem oder mehreren Silicaten von Alkalimetallen wie Na, K und/oder Erdalkalimetallen wie Ca, Mg und/oder Seltenerdmetallen wie Ce, gegebenenfalls in Form von Mischsilicaten von mindestens zwei dieser Elemente, durch Umsetzung von Siliciumdioxid mit Halogeniden, insbesondere Chlorid/en, Sulfat/en oder Nitrat/en der Alkalimetalle und/oder Seltenerdmetalle und/oder Erdalkalimetalle wie NaCl, KCl und $CeCl_4$, **dadurch gekennzeichnet, dass** die für die Umsetzung erforderliche Wärmezufuhr wenigstens teilweise von einem oder mehreren Tauchbrennern (3) geliefert wird, dessen/deren Flamme/n sich in der Masse der sich in Umsetzung befindlichen Ausgangsstoffe (5) entwickelt/entwickeln.

**2.** Verfahren nach dem vorhergehenden Anspruch, **dadurch gekennzeichnet, dass** der/die Tauchbrenner (3) mit einem Verbrennungsmittel in Form von Luft, mit Sauerstoff angereicherter Luft oder Sauerstoff versorgt wird/werden.

**3.** Verfahren nach einem der vorhergehenden Ansprüche, **dadurch gekennzeichnet, dass** der/die Tauchbrenner (3) mit einem Brennstoff in Form von einem natürlichen Gas, Heizöl oder Wasserstoff versorgt wird/werden.

**4.** Verfahren nach einem der vorhergehenden Ansprüche, **dadurch gekennzeichnet, dass** der Brennstoff in fester oder flüssiger Form in der Nähe des/der Brenner/s (3) zugeführt wird.

**5.** Verfahren nach Anspruch 4, **dadurch gekennzeichnet, dass** der in fester oder flüssiger Form vorliegende Brennstoff Kohlenwasserstoffe auf der Basis von gegebenenfalls chlorierten Polymeren oder auf der Basis von Kohle enthält.

**6.** Verfahren nach einem der vorhergehenden Ansprüche, **dadurch gekennzeichnet, dass** von dem von dem/den Tauchbrenner/n verursachten Verbrennungsvorgang wenigstens teilweise das Umrühren des Siliciumdioxids und des/der Halogenide/s, Sulfate/s oder Nitrate/s sichergestellt wird.

**7.** Verfahren nach einem der vorhergehenden Ansprüche, **dadurch gekennzeichnet, dass** von dem von dem/den Tauchbrenner/n (3) verursachten Verbrennungsvorgang wenigstens teilweise das für die Umsetzung erforderliche Wasser erzeugt wird.

**8.** Verfahren nach einem der vorhergehenden Ansprüche, **dadurch gekennzeichnet, dass** durch die Umsetzung auch halogenierte Derivate, insbesondere verwertbare chlorierte Derivate, wie HCl bzw. $Cl_2$ oder $H_2SO_4$ erzeugt

werden.

9. Verfahren nach einem der vorhergehenden Ansprüche, **dadurch gekennzeichnet, dass** das/die gebildete/n Silicat/e behandelt wird/werden, um es/sie für eine Verwendung als Glasrohstoff in einem Glasschmelzofen geeignet zu machen, wobei die Behandlung insbesondere eine Vermahlungsstufe umfasst.

10. Verfahren nach einem der Ansprüche 1 bis 8, **dadurch gekennzeichnet, dass** mit dem/den gebildeten Silicat/en, das/die heiß ist/sind, ein Glasschmelzofen versorgt wird.

11. Verfahren nach einem der vorhergehenden Ansprüche, **dadurch gekennzeichnet, dass** das Na-Silicat durch die Umsetzung von Siliciumdioxid mit Na-Sulfat hergestellt wird.

12. Vorrichtung zur Durchführung des Verfahrens nach einem der vorhergehenden Ansprüche, welche mindestens einen mit einem oder mehreren Tauchbrennern (3) ausgestatteten Reaktor (1) und mindestens ein Mittel für die Zufuhr des Siliciumdioxids und/oder des/der Halogenide/s, Sulfate/s oder Nitrate/s und gegebenenfalls der festen oder flüssigen Brennstoffe umfasst, **dadurch gekennzeichnet, dass** der Reaktor (1) mit Mitteln zur Behandlung der chlorierten Abprodukte oder von $H_2SO_4$, insbesondere mit Mitteln zur Rückgewinnung von HCl bzw. $Cl_2$, oder zur Neutralisation von HCl und/oder Mitteln zur Abtrennung von festen Teilchen, beispielsweise auf der Basis eines Metallchlorids, von den gasförmigen Abprodukten ausgerüstet ist.

13. Vorrichtung nach dem vorhergehenden Anspruch, **dadurch gekennzeichnet, dass** die Behandlungsmittel in einem Schornstein (9) angeordnet sind, durch welchen die Abgase aus dem Reaktor abgeleitet werden.

14. Vorrichtung nach einem der die Vorrichtung betreffenden vorhergehenden Ansprüche, **dadurch gekennzeichnet, dass** sich das Zuführungsmittel beim Schmelzvorgang (5) unter dem Niveau der Ausgangsstoffe befindet, insbesondere in Form einer eine Endlosschnecke enthaltenden Ofenbeschickung (6).

15. Vorrichtung nach einem der die Vorrichtung betreffenden vorhergehenden Ansprüche, **dadurch gekennzeichnet, dass** die Wände (2, 4) des Reaktors (1), insbesondere diejenigen, die für den Kontakt mit den an der Umsetzung beteiligten verschiedenen Reaktanten/Reaktionsprodukten vorgesehen sind, mit Feuerfestmaterialien, beispielsweise wie bei einem Elektroschmelzofen, oder mit Feuerfestmaterialien, die mit einem Metall vom Typ Titan oder Zirconium verstärkt sind, versehen oder auf der Basis dieser Metalltypen und vorzugsweise, wenigstens bei den Seitenwänden (4), mit einem Kühlsystem versehen sind, durch welches ein Fluid wie Wasser fließt.

16. Vorrichtung nach einem der die Vorrichtung betreffenden vorhergehenden Ansprüche, **dadurch gekennzeichnet, dass** die Wände des Reaktors (1) einen im Wesentlichen kubischen, parallelepipedischen oder zylindrischen Hohlraum bilden.

17. Anwendung des Verfahrens nach einem der Ansprüche 1 bis 11 auf die Herstellung von Glasrohstoffen für die Glasherstellung.

18. Anwendung des Verfahrens nach einem der Ansprüche 1 bis 11 auf die Herstellung von Ausgangsstoffen, insbesondere Natriumsilicat, für die Herstellung von Waschmitteln.

19. Anwendung des Verfahrens nach einem der Ansprüche 1 bis 11 auf die Herstellung von Ausgangsstoffen, insbesondere Natriumsilicat, zur Herstellung von gefälltem Siliciumdioxid, insbesondere aus Siliciumdioxid und Natriumsulfat.

20. Anwendung nach Anspruch 19, **dadurch gekennzeichnet, dass** das Natriumsilicat durch Umsetzung von Siliciumdioxid mit Natriumsulfat in einem Ofen hergestellt wird, dessen erforderliche Wärmezufuhr wenigstens teilweise von einem oder mehreren Tauchbrennern (3) bereitgestellt wird, wobei sich das gebildete $SO_3$ in Schwefelsäure umwandelt, die zurückgewonnen wird und dazu dient, das Natriumsilicat anzugreifen, um das gefällte Siliciumdioxid mit Bildung von Natriumsulfat, das in den Ofen rezirkuliert wird, herzustellen.

21. Anwendung nach Anspruch 19 oder 20, **dadurch gekennzeichnet, dass** das gefällte Siliciumdioxid als Füllstoff in Reifenkautschuk verwendet wird.

22. Anwendung des Verfahrens nach einem der Ansprüche 1 bis 11 auf das Glasig/Inert-Machen von Abfällen vom Typ chlorierter organischer Abfälle, vorzugsweise durch Umsetzung mit Siliciumdioxid und dem mindestens Erdalkalimetall/e enthaltenden Ausgangsstoff.

23. Anwendung des Verfahrens nach einem der Ansprüche 1 bis 11 auf die Behandlung von Sand, der von Brennstoff oder anderen Kohlenwasserstoffverbindungen verschmutzt ist, vorzugsweise durch Umsetzung mit Siliciumdioxid und dem wenigstens Erdalkalimetall/e enthaltenden Ausgangsstoff.

24. Verfahren zur Herstellung von Glas, das Siliciumdioxid und Alkalimetalloxide vom Typ $Na_2O$, $K_2O$ und/oder Erdalkalimetalloxide vom Typ CaO, MgO und/oder Seltenerdmetalloxide vom Typ $CeO_2$ enthält, durch Schmelzen von Glasrohstoffen, wobei die für den Schmelzvorgang erforderliche Wärmezufuhr wenigstens teilweise von einem oder mehreren Tauchbrennern (3) bereitgestellt wird, dessen/deren Flamme/n sich in der Masse aus in Umsetzung befindlichen Ausgangsstoffen entwickelt/entwickeln, **dadurch gekennzeichnet, dass** die Glasrohstoffe, die Alkalimetalle vom Typ Na, K oder Seltenerdmetalle vom Typ Ce oder Erdalkalimetalle enthalten, wenigstens teilweise in Form von Halogeniden, insbesondere Chloriden, Sulfaten oder Nitraten dieser Elemente wie NaCl, KCl, $CeCl_4$ und $Na_2SO_4$, vorliegen.

## Claims

1. Method of manufacturing compounds based on silicate or silicates of an alkali such as Na or K and/or of an alkaline earth such as Ca, Mg and/or of a rare earth such as Ce, possibly in the form of mixed silicates combining at least two of these elements, by conversion of silica and halides, in particular chloride (s) or sulphate(s) or nitrate (s) of the said alkalis and/or the said rare earths and/or the said alkaline earths, such as NaCl, KCl, $CeCl_4$, **characterised in that** the addition of heat necessary for the conversion is supplied, at least partly, by one or more immersed burners (3) whose flame or flames develop within the very mass of the materials (5) in the course of conversion.

2. Method according to the preceding claim, **characterised in that** the immersed burner or burners (3) are supplied with an oxidant in the form of air, oxygen-enriched air or oxygen.

3. Method according to one of the preceding claims, **characterised in that** the immersed burner or burners (3) are supplied with a fuel in the form of natural gas, fuel oil or hydrogen.

4. Method according to one of the preceding claims, **characterised in that** fuel in solid or liquid form is brought close to the said burner or burners (3).

5. Method according to Claim 4, **characterised in that** the fuel in soluble liquid form contains carbonaceous materials based on polymers, possibly chlorinated, or based on coal.

6. Method according to one of the preceding claims, **characterised in that** the combustion created by the immersed burner or burners at least partly provides the stirring of the silica and/or halide(s) or sulphate(s) or nitrate(s).

7. Method according to one of the preceding claims, **characterised in that** the combustion created by the immersed burner or burners (3) at least partly generates the water necessary for the conversion.

8. Method according to one of the preceding claims, **characterised in that** the conversion also generates halogenated derivatives, in particular usable chlorinated derivatives such as HCl or $Cl_2$, or $H_2SO_4$.

9. Method according to one of the preceding claims, **characterised in that** the silicate or silicates formed are processed in order to make them compatible with a use as vitrifiable raw material or materials for a glass-making furnace, a processing comprising in particular a granulation step.

10. Method according to one of Claims 1 to 8, **characterised in that** the silicate or silicates formed supply a glass-making furnace hot.

11. Method according to one of the preceding claims, **characterised in that** silicate of Na is manufactured by conversion of silica and sulphate of Na.

12. Device for implementing the method according to one of the preceding claims, comprising at least one reactor (1) equipped with immersed burner or burners (3) and at least one means of introducing silica and/or halide or halides, sulphates or nitrates and possibly the solid or liquid fuels, **characterised in that** the reactor (1) is equipped with means of processing chlorinated effluents or $H_2SO_4$, in particular means of recovering HCl or $Cl_2$, or neutralising HCl and/or means of separating solid particles in the gaseous effluents, for example based on metallic chloride.

13. Device according to the preceding claim, **characterised in that** the processing means are disposed in a flue (9) discharging the fumes from the reactor.

14. Device according to one of the previous device claims, **characterised in that** the introduction means is situated below the level of the materials being fused (5), in particular in the form of a worm charger or chargers (6).

15. Device according to one of the preceding device claims, **characterised in that** the walls (2, 4) of the reactor (1), in particular those intended to be in contact with the various reagents/reaction products involved in the conversion, are provided with refractory materials, for example of the electromelted type, or refractory materials lined with a metal lining of the titanium or zirconium type or are based on these types of metal, and are preferably associated, at least with regard to the side walls (4), with a system of cooling by circulation.of fluid of the water type.

16. Device according to one of the preceding device claims, **characterised in that** the walls of the reactor (1) define a substantially cubic, parallelepipedal or cylindrical cavity.

17. Use of the method according to one of Claims 1 to 11, for preparing vitrifiable raw materials for the manufacture of glass.

18. Use of the method according to one of Claims 1 to 11 for preparing raw materials, in particular sodium silicate, for manufacturing detergents.

19. Use of the method according to one of Claims 1 to 11 for preparing raw materials, in particular sodium silicate, for manufacturing precipitated silica, more particularly from silica and sodium sulphate.

20. Use according to Claim 19, **characterised in that** sodium silicate is manufactured by converting silica and sodium sulphate in a furnace where the necessary addition of heat is supplied at least partly by an immersed burner or burners (3), the $SO_3$ generated being converted into sulphuric acid which is recovered and which serves to attack the said sodium silicate in order to make the said precipitated silica with the formation of sodium sulphate, which is recycled in the said furnace.

21. Use according to one of Claims 19 and 20, **characterised in that** the precipitated silica is used as a filler in rubber for tyres.

22. Use of the method according to one of Claims 1 to 11 for vitrifying/inerting waste of the organo-chlorinated waste type, preferably by conversion of silica and raw material carrying alkaline earth at least.

23. Use of the method according to one of Claims 1 to 11 for reprocessing sand contaminated with fuel oil or other hydrocarbon-containing compounds, preferably by the conversion of silica and raw material carrying alkaline earths at least.

24. Method of obtaining glass containing silica and alkali oxides of the $Na_2O$ or $K_2O$ type and/or alkaline earth oxides of the CaO or MgO type and/or rare earth oxides of the $CeO_2$ type by fusion of vitrifiable materials where the addition of heat necessary for the said fusion comes at least partly from an immersed burner or burners (3) whose flame or flames develop within the very mass of the materials during conversion, **characterised in that** the vitrifiable materials carrying alkalis of the Na or K or rare earths of the Ce or alkaline earth type are at least partly in the form of halides, in particular chlorides or sulphates or nitrates of the said elements, such as NaCl, KCl, $CeCl_4$ or $Na_2SO_4$.